# EUROPEAN PATENT SPECIFICATION

(11) **EP 0 483 347 B1**
(45) Date of publication and mention of the grant of the patent: **05.01.2000**
(21) Application number: 91911203.7
(22) Date of filing: 20.05.1991
(51) Int. Cl.: G06F 11/14, G06F 9/46

(54) **QUEUE-BASED INTER-PROCESS COMMUNICATIONS SYSTEM FOR DIGITAL DATA PROCESSING SYSTEM**
AUF WARTESCHLANGEN BASIERTES INTERPROZESSKOMMUNIKATIONSSYSTEM FÜR EIN DIGITALES DATENVERARBEITUNGSSYSTEM
SYSTEME DE COMMUNICATIONS INTER-TRAITEMENTS BASES SUR DES FILES D'ATTENTE POUR SYSTEME DE TRAITEMENT DE DONNEES NUMERIQUES

(30) Priority: 21.05.1990 US 526134
(43) Date of publication of application: 06.05.1992
(73) Proprietor: DIGITAL EQUIPMENT CORPORATION, Maynard, MA 01754 (US)
(72) Inventor: MANN, Bruce, E., Mason, NH 03048 (US); ROSEN, Michael, R., Wilton, NH 03086 (US); BARADINE, Pamela, A., Hudson, NH 03051 (US)
(74) Representative: Goodman, Christopher
(86) International application number: US9103528
(87) International publication number: WO9118344

(56) References cited:
- EP-A- 0 353 079
- PROCEEDINGS OF THE 1985 INTERNATIONAL CONFERENCE ON PARALLEL PROCESSING August 20, 1985, IEEE COMP. SOC. PRESS WASHINGTON, US pages 139 - 142; AHMED K. EZZAT ET AL.: 'Making oneself known in a distributed world '
- IEEE TRANSACTIONS ON COMPUTERS. vol. C-36, no. 8, August 1987, NEW YORK US pages 976 - 987; YANN-HANG LEE ET AL.: 'Progressive Transaction Recovery in distributed DB/DC Systems '
- SIXTH SYMPOSIUM ON RELIABILITY IN DISTRIBUTED SOFTWARE AND DATABASE SYSTEMS March 17, 1987, IEEE COMP. SOC. PRESS WASHINGTON, US pages 3 - 11; A. S. TANENBAUM ET AL.: 'Reliability Issues in Distributed Operating Systems '
- REAL-TIME SYSTEMS SYMPOSIUM December 3, 1985, IEEE COMP. SOC. PRESS WASHINGTON, US pages 79 - 87; A. KUNG ET AL.: 'GALAXY: A DISTRIBUTED REAL-TIME OPERATING SYSTEM SUPPORTING HIGH AVAILABILITY '

## Description

### BACKGROUND OF THE INVENTION

The invention relates generally to the field of digital data processing systems, and more particularly to a system for facilitating communications among processes in a digital data processing system.

A digital data processing system or computer system, typically executes programs in the context of processes. The term "program" is used to identify the instructions that are executed by the computer system, and "process" is a broader term used to identify the data and state information that indicates the state of the system while the instructions are being executed. A process is typically provided with its own virtual address space, and essentially forms a unit of execution within the system. Under many circumstances, a process may be needed to transmit information to other processes which may be either on the same computer or on another computer in a distributed computing environment.

Computer systems include operating systems which manage processes and computer system resources for the processes. Typical operating systems provide at least one, and in some cases several, interprocess communication mechanisms. Some communications mechanisms make use of shared areas of the processes' virtually address spaces or shared filed and synchronization flags.

When a process needs to transmit a message to another process, the transmitting process typically loads the message into a shared area or file and sets the condition of certain flags to indicate the presence of the new message. The intended recipient can learn of the message by testing the condition of the flags, and can then retrieve the message.

In commercial transaction processing systems, especially distributed ones, managing the flow of requests is often as important as executing the transactions themselves. This management can be done via a queue.

A queue in a transaction processing system serves as an intermediary between a "client" and "server." A client is a process which enters a request into a queue that is served by the desired server. A "server" is a process which obtains the request by removing it from the queue.

A request is a data structure (e.g., a record) that describes some work that the system should perform. Typically, a user interacts with a client program to prepare a request (e.g., by filling in a form), and then the client sends the request to a server for processing. The server processes the request by executing one or more transactions. After it finishes processing the request, the server may send a response back to the client, which delivers it to the user.

The client typically doesn't need to access shared updatable data. Therefore, in a distributed system, it often runs in a "front-end" process close to the user's display, where processor cycles are inexpensive and interactive feedback is easy to attain.

The server typically needs access to a shared updatable database, often a large one. Therefore, it executes on a large "back-end" system, which is accessible to many clients.

A queue manager is a type of database system. It stores queue "elements. "The queue elements are usually not interpreted by the queue manager, so the queue manager does not know that the elements represent requests. A queue manager is also a type of communication system, since it moves between processes that run a synchronously.

Queues allow for "indirect" communication between processes because the queues temporarily store requests or responses. For example, a process that enqueues a request can communicate with one that executes the request even if they are not both operational simultaneously. This indirect communication can mask process failures by allowing communicating processes to execute and fail independently.

When a process enqueues a request in a queue the queue returns a reply indicating that the queue has stored the request. However, the reply does not indicate that the server has begun processing the request to formulate a response, but merely that the request has been properly received by the queue.

Indirect communication via queues can also mask communication failures: if a client enqueues its requests to a local queue, and periodically moves its local requests to the remote input queue of a server process, then the server appears to provide a reliable service to the client even if the client and server nodes are frequently partitioned by communication failures. These features improve availability and efficiency.

If ordinary messages are used to move requests and replies between clients and servers, then an untimely system failure (e.g., when the request or reply is in transit) may cause either the request or the reply to be lost. The client may be unable to determine whether the request or reply has been lost. Moreover, often the client cannot resubmit the request unless it is sure that the original request has not been and won't be processed.

It is an object of the present invention to provide an information transfer system that identifies when transmission errors or system failures have occurred.

The present invention provides an information transfer system that provides sufficient information about errors to permit recovery.

An embodiment of the present invention increases reliability of the information transfer system by durably storing information transferred through the queue. After failure of the queue, the queue can recover to its last consistent state without loss or duplication of transferred information.

The described embodiment provides a fast and efficient transfer mechanism that allows error detection and recovery.

### SUMMARY OF THE INVENTION

In brief summary, the information transfer system transfers stimuli among client processes and server processes. To transfer stimuli or receive stimuli, a process must first perform a registration operation. At the completion of stimuli transfer receipt, the process performs a deregistration operation. If the process has previously registered and has not performed a deregistration operation, the process is supplied with the last stimulus it received or transferred.

The invention in its broad form resides in a process of communication between clients and a host system in an information transmission system, as recited in claims 1 & 2.

The present invention ensures that a stimulus is delivered and processed in the event of a malfunction in either the client process or server processes, the information transfer system of this invention ensures that stimuli are not lost or duplicated. This occurs because the information transfer system maintains the last stimulus transferred from a client process. Thus, when a client process attempts to perform a registration process with the information transfer system for a transfer without having performed a deregistration operation for the last transfer, the information transfer system sends to that client process the most recent stimulus it received from that client process. As a result, the client process can take appropriate corrective action.

The information transfer system of this invention provides a similar benefit for server processes when they register without previously having deregistered.

### BRIEF DESCRIPTION OF THE DRAWINGS

This invention is pointed out with particularity in the appended claims. These and further advantages of this invention may be better understood by referring to the following description of an exemplary embodiment taken in conjunction with the accompanying drawings, in which:
Fig. 1 is a functional block diagram depicting a preferred implementation of system, in accordance with a preferred embodiment, for facilitating communications among processes in a digital data processing system;
Fig. 2 is a chart showing the data structures of the queue in Fig. 1;
Fig. 3A is a chart showing the data structures of the queue attribute list in Fig. 1;
Fig. 3B is a chart showing the data structures of the registrant list in Fig. 1;
Fig. 3C is a chart showing the data structures of one of the thread elements shown in Fig. 3B;
Fig. 4 is a flow diagram showing a preferred implementation of a registration operation;
Fig. 5 is a flow diagram showing a preferred implementation of the enqueuing of a request;
Fig. 6 is a flow diagram showing a preferred implementation of the dequeuing of a request;
Fig. 7 is a flow diagram showing a preferred implementation of a deregistration operation;
Fig. 8 is a flow diagram showing a preferred implementation of an implied acknowledgment operation for a single thread of control;
Fig. 9 is a flow diagram showing a preferred implementation of a retransmission operation of a failed request for a single thread of control;
Fig. 10 is a flow diagram showing a preferred implementation of an implied acknowledgment operation for a multiple thread of control; and
Fig. 11 is a flow diagram showing a preferred implementation of a retransmission operation of a failed request for a multiple thread of control.

### DETAILED DESCRIPTION OF THE PREFERRED EMBODIMENTS

Reference will now be made in detail to a preferred implementation of this invention, examples of which are shown in the accompanying drawings.

### A. System Components

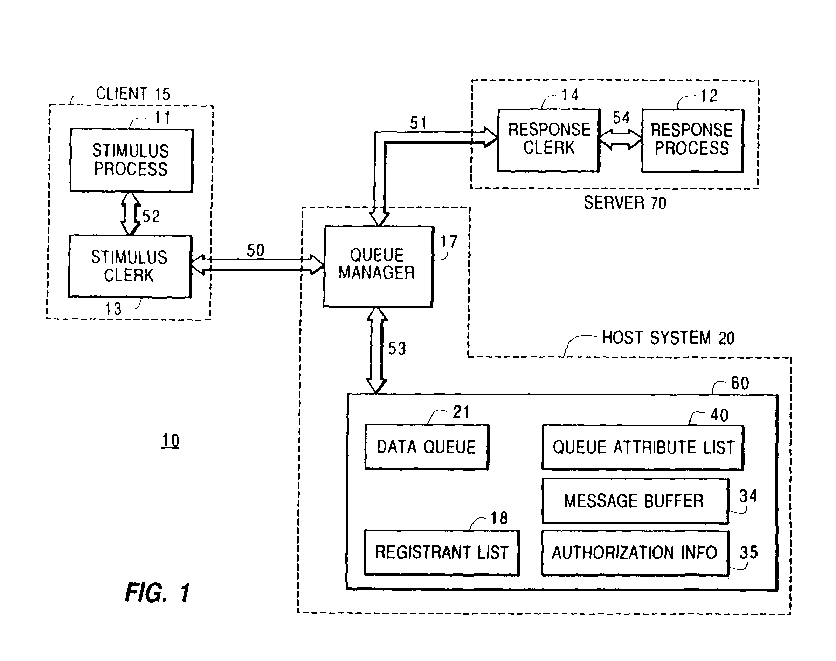

Fig. 1 is a functional block diagram of a communications system 10 for facilitating communications among processes in-a digital data processing system. With reference to Fig. 1, communications proceed to and from a client 15 from and to a host system 20. The client 15 sequentially generates requests, sometimes called "stimuli," which it transfers to the host system 20. The server system 70 receives requests and processes them. The server system 70 may also, in some cases, generate a response responsive to a request and transfers the response to the client 15. Generally, the term stimuli may connote both requests and responses.

The client 15 preferably includes a stimulus clerk 13 which communicates with host system 20 over a communications link 50. Client 15 also includes a stimulus process 11 which communicates with the stimulus clerk 13 over communications link 52.

In the preferred embodiment as shown in Fig. 1, the host system 20 includes a queue manager 17 and a queue database 60. The server 70 includes a response process 12 which communicates to a response clerk 14 over a communications link 54. The response clerk 14 communicates with the host system 20 over a communications link 51. The queue manager 17 communicates with the queue database 60 over a communications link 53. Alternatively, the communications links 50, 51, 52, 53 and 54 could be implemented via procedure calls within a single computer system.

Although the following description includes discussions of queue systems, the present invention in many of its aspects may be implemented without the use of queue systems. Many aspects of the present invention may generally be implemented in an information storage and transfer system.

The queue database 60 includes one or more data queues 21, a queue attribute list 40 associated with each data queue 21, a registrant list 18 associated with each data queue 21, a message buffer 34, and authorization information 35.

The data queue 21 stores requests that are being transferred from the client 15 to the server 70. Also, the data queues 21 store responses that are being transferred from the server 70 to the client 15. The client 15 may enter a request or the server 70 may enter a response into the data queues 21 by implementing an enqueue operation. The server 70 may receive a request, or the client 15 may receive a response by implementing a dequeue operation.

In an alternative embodiment, it may be desirable to configure the server 70 as a series of processes (not shown) each linked to the previous and subsequent process by a queue system. This configuration will be transparent to the client 15, however,because the client 15 will simply enqueue the request in the first queue (not shown) in the series and receive the response from the last queue (not shown) in the series.

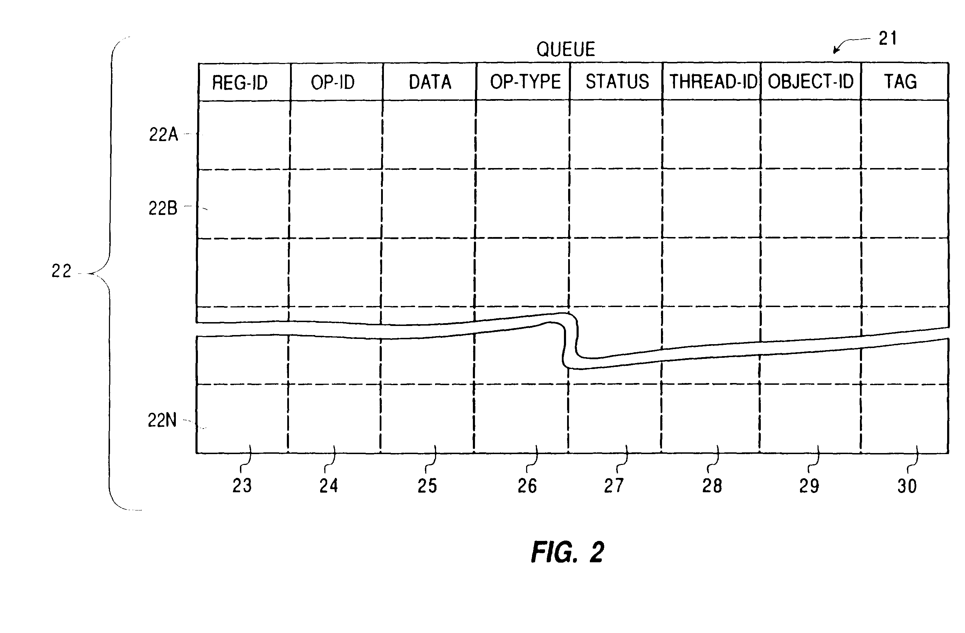

Fig. 2 shows an example of one of the data queue 21 in greater detail. Each data queue 21 includes a plurality of entries 22. The specific entries 22A through 22N are shown by way of illustration and not limitation. As shown in Fig. 2, each entry 22 includes a registrant identification (REG-ID) field 23, an operation identification (OP-ID) field 24, a data field 25, an operation type (OP-TYPE) field 26, a status field 27, a thread identification (THREAD-ID) field 28, an object identification (OBJECT-ID) field 29, and a tag 30.

Each queue entry 22 may correspond to a different request or response, for example. In each queue entry 22, data field 25 contains the information to be transferred between the client 15 and the server 70 in the corresponding request or response. Registrant identification field 23 in each entry 22 contains the identification of the client 15 or server 70 that generated the data in field 25. The operation identification field 24 receives an operation identification value which uniquely identifies the corresponding request or response.

The contents of operation type field 26 identifies the type of operation performed by the queue manager 17. In the preferred embodiment, for example, the operation type of the request or response may be an enqueue. The status field 27 contains information indicating the status of the corresponding request or response.

The thread identification field 28 contains information identifying which thread of control of the client 50 initiated the request. The thread identification information is provided by the client 15 or server 70 in the request or response.

The use of a thread identification allows "concurrency" by which a single client or server may communicate with the queue on behalf of a plurality of processes. The several threads may correspond to several different processes contained within the client or server. A client (or server) must be identified by both a registrant-id and a thread-id to provide such concurrency. Thus, clients could be simultaneously executing process A and process B, both submitting requests and receiving responses from the queue. Process A could be identified to the queue 21 as thread 1 of the client and process B could be identified to the queue 21 as thread 2 of the client. Alternatively, several threads may correspond to a single process.

The object identification field 29 contains a unique identifier of the object within the data queue 21. In the preferred embodiment, an object is the group of fields 23-30 associated with the stimuli.

The tag field 30 contains information provided by the client 15 or the server 70 in the request or response to assist in recovering from failures. This information will be explained in greater detail below.

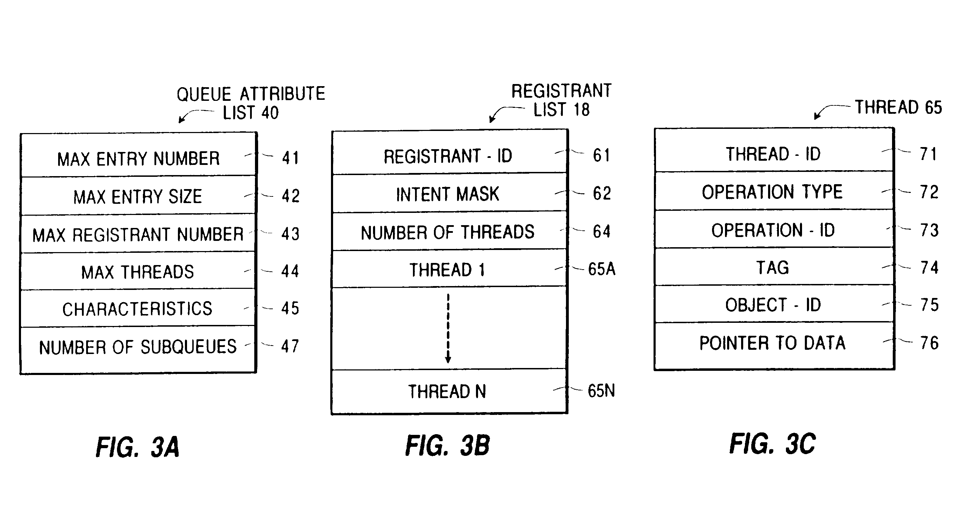

The queue attribute list 40, which is shown in detail in Fig. 3A, defines selected attributes of the associated data queue 21. For example, the queue attribute list 40 provides information as to the entries which make up data queue 21, as well as housekeeping information with respect to the data queue 21. The information in queue attribute list 40 also enables the queue manager 17 to establish the associated data queue 21.

As shown in Fig. 3A, the queue attribute list 40 includes a maximum entry number field 41, which contains information to identify the maximum number of entries 22 in the data queue 21, and a maximum entry size field 42, which contains information to identify the maximum size of each entry 22. Maximum entry size field 42 defines the maximum size of the data field 25 in the entries 22.

Queue attribute list 40 also includes a subqueue field 47 which contains information about "subqueues" in the corresponding queue 21. The entries 22 in data queue 21 may be divided into a plurality of subqueues according to relative priority, request type, and so forth. If the subqueues provide differing priority levels, a client 15 may identify a priority level. If a plurality of servers 70 are divided into groups which provide different types of processing services, the subqueues may be associated with the various types of requests, and a request received from a client 15 will be enqueued into the subqueue associated with the particular type of request. The subqueue field 47 identify the number of subqueues into which the data queue 21 may be divided, as well as the number of entries 22 in each subqueue.

The queue attribute list 40 includes several housekeeping fields. One such field is a maximum registrant number field 43 which contains information to identify the maximum number of registrants that can communicate through the corresponding data queue 21. The registration process is described below. Each registrant can be either client 15 or server 70 in the preferred embodiment, and is identified in the registrant list 18. The maximum registrant number field 43 may be subdivided into sub fields identifying the maximum number of servers 70 allowed, or the maximum number of clients 15 allowed.

The queue attribute list 40 includes a maximum threads field 44 which contains information to identify the maximum number of threads per registrant allowed by the queue manager 17.

The queue attribute list 40 further includes a characteristics field 45 which contains information to identify various storage techniques which may be used by the queue database 60. For example, the characteristics field 45 may contain information directing the queue manager 17 to store information in volatile memory. Generally, volatile memory is faster, and may be preferred when permanent storage of stimuli is not required. However, volatile memory should include a permanent storage backup to preserve storage integrity. Also, the characteristics field 45 may contain information directing the queue manager to redundantly store all information to protect against failure, for example, of the data queue 21.

The registrant list 18 shown in Fig. 3B includes a registrant identification value 61, an intent mask 62, the number of threads 64 assigned to the registrant, and particular information for each thread represented generally by reference numeral 65. In Fig. 3B ,the first thread is indicated by reference numeral 65A and the Nth thread is indicated by 65N.

The registrant identification value 61 contains information which uniquely identifies each particular registrant. The intent mask 62 contains information provided by a registrant upon registration identifying a set of operations which the registrant intends to perform prior to deregistration. The queue manager 17 may compare the intent mask 62 information and the authorization information 35 upon registration for consistency. The number of threads value 64 identifies how many threads of control the queue manager 17 has allocated for the registrant. The number of threads value stored in field 64 must be less than or equal to the number stored in the maximum threads field 44 of the queue attribute list 40.

The particular data structure of the information for thread 65 is shown in Fig. 3C. The information for all threads is similar. In thread information 65, the thread identification value 71 uniquely identifies a particular thread associated with a registrant. The operation type 72 is the most recent operation type performed by the thread identified by the thread identification value 71. In the preferred embodiment, for example, the operation type may be an enqueue, a dequeue, a queue status request, or a cancel entry request. The operation identification value 73 is a unique identifier of the request in a series of requests transmitted by the client 15 for a particular thread of control to the host system 20, or in the response in a series of responses transmitted by the server 70 to the client 15.

The tag 74 contains information provided by the client 15 or the server 70 to assist in recovering from failures. The object identification value 75 is a unique identifier of the entry 22 in the queue associated with an operation of a particular thread of control within the data queue 21. A pointer to the data value 76 contains a storage location where the data for the request or response may be found. This location is preferably the storage location of the data 25 as previously discussed in reference to Fig. 2.

The host system 20 controls the communication between client 15 and server 70. Upon receipt of a request or response, the queue manager 17 stores the request or response in an entry 22 in the data queue 21 in a durable manner before any reply is sent. Queue manager 17 also stores the appropriate information in the registrant list 18 and the thread data structure 64 associated with the registrant and particular thread of control. Although the registrant list 18 provides redundant information (the queue manager 17 can identify the last request or response received 4 from a client 15 or server 70 by searching the data queue 21), the registrant list 18 can simplify identification of and access to this information. This is especially helpful if the data queue 21 is long.

With a plurality of servers 70 and a plurality of clients 15,the transferring of stimuli through data queue 21 may be performed somewhat differently. The requests are not directed to any particular response process 12. Requests are received by response processes 12 from data queue 21 in response to their respective abilities to process to requests. However, since requests are not directed through data queue 21 to any particular response process 12, the queuing system 15 includes a message buffer 34 which enables a client 15 to optionally transmit a message to a particular response process 12.

The message buffer 34 may be a conventional buffer. In this case, the host system 20 stores messages from stimulus process 11 (received from the stimulus clerk 13 over communications link 50)before transmitting those messages over communications link 51 to the response clerk 14 for transfer to the response process 12 that is the intended recipient. However, to preserve system integrity, stimuli should not be transferred via the message buffer 34 because the message buffer may not durably store messages.

Alternatively, the message buffer 34 may comprise data structures similar to data queue 21 and registrant list 18 associated with each response process 12 which may receive a message. If the message buffer 34 includes such structures, the host system 20 may ensure transfer of messages to the response clients 12 in the presence of failures or malfunctions of the stimulus processes 15 and response processes 12.

The authorization information 35 contains information associated with each potential registrant which indicates a set of operations which a registrant is authorized by the queue manager 17 to perform. For example, a registrant may only be authorized to perform enqueue operations, but not dequeue operations.

### B. Registration

The present invention ensures that communications between the client 15 and host system 20 proceed without loss of stimuli in the event of a malfunction of either the client 15 or the host system 20. A communications session through the information transfer system proceeds in three phases:a registration phase, a stimuli transfer phase, and a deregistration phase.

Although the following description is from the perspective of a client 15 transmitting a request to a server 70 through a queue manager 17 and associated queue database 60, many of the following descriptions are applicable to the perspective of a server 70 transmitting a response to a client 15 through a queue manager 17 and associated queue database 60.

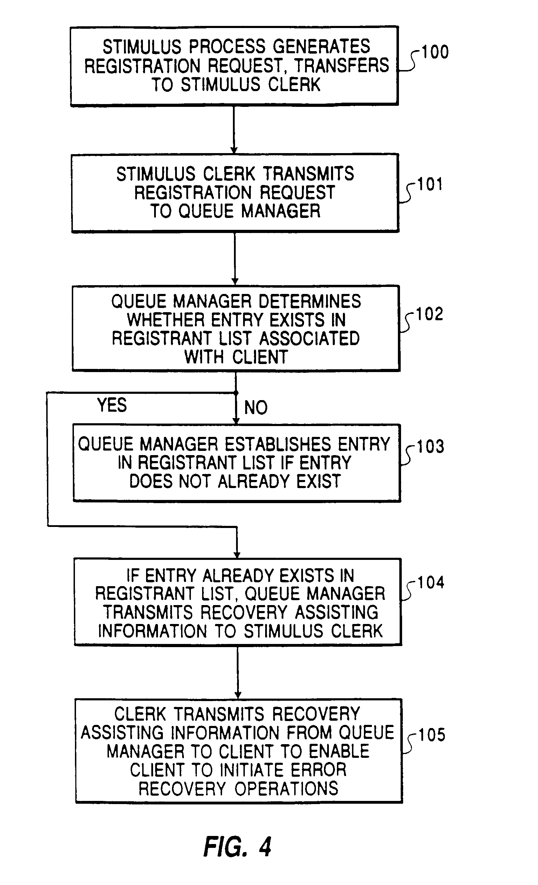

The operation of the registration phase is generally depicted in the flow diagram in Fig. 4. In that operation, a registering stimulus process 11 generates a registration request and transfers that request to stimulus clerk 13 (step 100). Stimulus clerk 13 then transmits the registration request to the queue manager 17 (step 101), which effectively serves to identify the client 15 to the host system 20. The queue manager 17 determines whether the registrant list 18 includes a series of entries 61-65 associated with the registering client 15 (step 102). If the queue manager 17 determines in step 102 that no entry exists in the appropriate registrant list 18, the queue manager 17 establishes a series of entries 61-65, which are thereafter associated with the client 15 (step 103).

If the queue manager 17 instead determines that the registrant list 18 contains a series of entries 61-65 associated with the client 15 which generated the registration request, then queue manager 17 knows that the client 15 is registering without having previously deregistered, which indicates a failure or malfunction in connection with the client 15. The queue manager 17 thereupon transmits the contents of the series of entries 61-65 associated with the client 15 to the stimulus clerk 13. Stimulus clerk 13 in turn advises stimulus process (step 105). In the preferred embodiment, the tag 74 is included in the information transmitted to the client 15 and may include state information to allow the client 15 to determine its state just prior to failure to facilitate the error recovery operation. Also, the operation identification value 73 included in thread 65 is useful in error recovery. For example, a client 15 recovering from failure may compare the returned operation identification value 73 with a value separately stored by the client 15 prior to failure. The comparison may allow the client 15 to determine whether it is necessary to retransmit the last stimuli sent to the queue manager 17. In the preferred embodiment, if the operation identification value 73 is unique in connection with the series of stimuli provided by the client 15, such as a sequentially-incremented value for each stimulus provided by the client 15, the client 15 can use the operation identification value 73 to determine whether the last stimulus sent by the client 15 was received by the queue manager. Also, in the preferred embodiment, the information stored in the series of entries 61-65 of the registration list 18 is stored on a durable memory device which retains integrity through failure.

### C. Stimuli Transfer

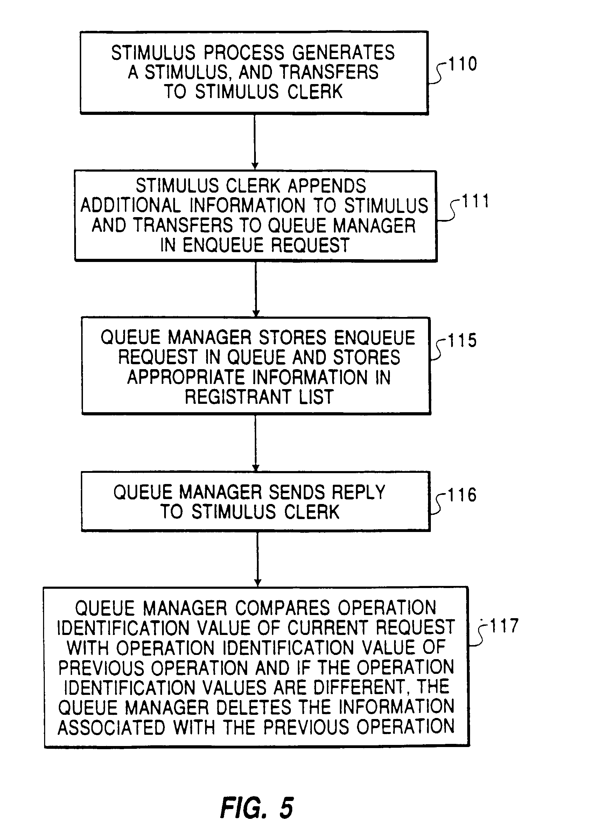

After a client 15 has performed a registration operation and before it has performed a deregistration operation, as subsequently described, it may transmit stimuli through the information transfer system. In the preferred embodiment, stimuli transfer is accomplished by enqueue and dequeue operations of requests and responses performed by the host system 20. Fig. 5 generally depicts request enqueuing operations in connection with transmission of a stimulus.

The stimulus clerk 13 initially receives a message from a client 15 (step 110). In the preferred embodiment, the message for the client 15 includes at least information corresponding to the data field 25 and the tag field 74. Upon receipt of each message from a client 15, the stimulus clerk 13 appends additional information to the message to form a request. The entire request may include several different types of information, such as information for the registrant identification field 23, operation identification 24 field, data field 25, an operation type field 26, thread identification 28 field, and tag 30, in a queue entry 22, as shown in Fig. 2. Other types of information may also be included in the request.

The stimulus clerk 13 then transmits the request as an enqueue request over a communications link 50 to the host system 20 (step 111).

The queue manager 17 stores the request in the data queue 21 in the queue database 60 (step 115). Because the request is stored in a queue in the preferred embodiment, the request is placed in the last entry or tail of the queue. However, the present invention does not require specific ordering for the placement of the request in storage. Preferably, the data queue 21 stores the request on a durable memory which retains integrity through failure. In storing the request from the enqueue request in the tail entry of data queue 21, the queue manager 17 stores the various information included in the request in the appropriate fields in the data queue 21 and updates the fields 61-65 in the registrant list 18 with the appropriate information. After the host system 20 stores this information on durable memory, the host system 20 sends a reply to acknowledge the stimulus (step 116).

In the enqueue operation previously described, reference is made to the entry 22 associated with the enqueue, thereby indicating that the information contained in this entry 22 is necessary to assist in the failure recovery of the client 15.

The operation identification value 24 contained in the present request determines whether the host system 20 can delete the reference to entry 22 associated with the previous operation of the client 15. For example, if the host system 20 receives an operation including an operation identification value which is identical to the operation identification value of the previous operation, a retransmission of the previous request is indicated to the host system 20. However, if the host system 20 receives a request including an operation identification value which is different from the operation identification value of the previous operation, the transmission of a new operation is indicated to the host system 20. In this case, the transmission of a new operation impliedly acknowledges to the host system 20 that a failure has not occurred. Therefore, the host system 20 may then delete the reference to entry 22 associated with the previous operation. If no other references to the entry 22 exist, which indicates that entry 22 is not required for the future failure recovery of any other registrants, then the host system 20 may delete entry 22 (step 117). In the preferred embodiment, the operation identification value 24 is sequentially incremented each time a new operation is performed.

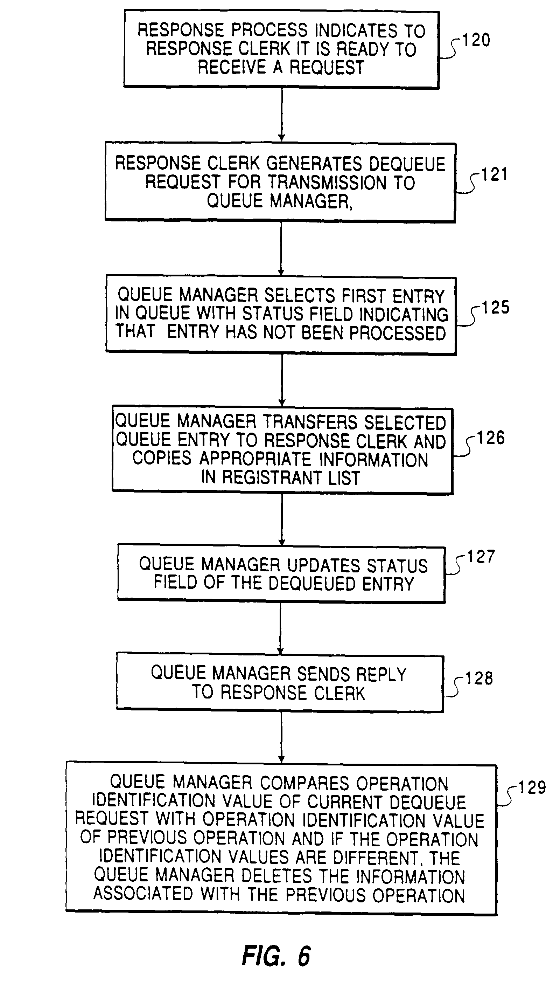

Once the request has been enqueued, the server 70 may then receive the request by executing a dequeue operation. As shown in Fig. 6, a response process 12 indicates to the response clerk 14 that it is ready to receive a request (step 120). In the preferred embodiment, a tag intended for the tag field 74 is generated by the response process 12 and is passed to the response clerk 14. The response clerk 14 generates a dequeue request by including additional information, such as information for the registrant identification field 23, operation identification 24 field, an operation type field 26, and thread identification 28 field in a queue entry 22, as shown in Fig. 2. Other types of information may also be included in the dequeue request. The response clerk 14 then transmits the dequeue request -to the queue manager 17 (step 121).

The queue manager 17 scans queue entries 22 in the data queue 21 and selects the first entry with a status field indicating that the request has not been processed (step 125). The queue manager transfers this first entry to the response clerk 14 and copies the appropriate information to the registrant list 18 in the appropriate location associated with the server 70 (step 126). The queue manager updates the status field of the entry 22 to indicate that the entry has been dequeued (step 127). After this information has been durably stored, a reply message is returned to the server 70 by the queue manager 17 (step 128).

In the dequeue operation as previously described, the operation identification value 24 contained in the present operation determines whether the host system 20 can delete the entry 22 associated with the previous operation. For example, if the host system 20 receives a dequeue request including an operation identification value which is identical to the operation identification value of the previous operation, a retransmission of the previous dequeue request is indicated to the host system 20. However, if the host system 20 receives an dequeue request including an operation identification value which is different from the operation identification value of the previous operation,the transmission of a new operation is indicated to the host system 20. In this case, the transmission of a new operation impliedly acknowledges to the host system 20 that a failure has not occurred. Therefore, the host system 20 may then delete the entry 22 associated with the previous operation (step 129).

In the preferred embodiment, operations requested of the host system 20 other than enqueue and dequeue also cause the host system to function in a similar fashion. Therefore, the host system 20 updates the information included in the thread field 65 when the host system receives any type of operation requests and durably stores this information prior to sending a reply. Also,upon receipt of an operation request, the host system 20 removes the reference to the entry 22 of the previous operation associated with the registrant which sent the operation request. The host system 20 may then delete the entry 22 of the previous operation if no other references to this entry exist. As previously described, no other references to an entry exist when the information contained in the entry is not needed for the use of any other registrant, or for the failure recovery of any other registrant.

### D. Deregistration

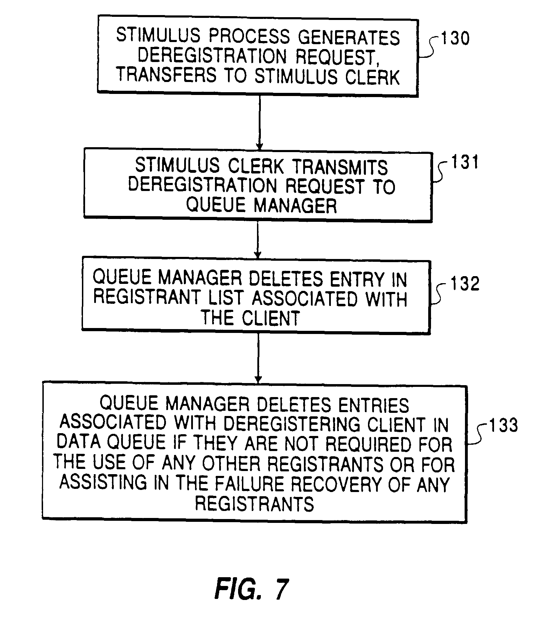

Fig. 7 shows a preferred implementation of the operations performed during the deregistration phase. In response to a deregistration request from a client 15, the stimulus process generates a deregistration message that it transmits to stimulus clerk 13 (step 130). Stimulus clerk 13 then transfers that deregistration request over the communications link 50 to the queue manager 17 (step 131). The host system 20 thereafter eliminates the series of entries 61-65 associated with the client 15 in the registrant list 18 (step 132). In the preferred embodiment, the queue manager 17 searches the queue database 60 for the proper entries in the registrant list 18 associated with the client 15 and erases the data. Also, a deregistration signal indicates to the host system 20 that any entries 22 referenced by the registrant need not be stored to assist in future failure recovery of the deregistering registrant. Therefore, the host system 20 may delete such entries 22 if they are not required in the use of any other registrants, or for assisting in the failure recovery of any other registrants (step 133). For example, the host system 20 may not delete an entry associated with an enqueued reply from a deregistering server 70 if the reply has not been dequeued by the client 15.

### E. Thread Operation

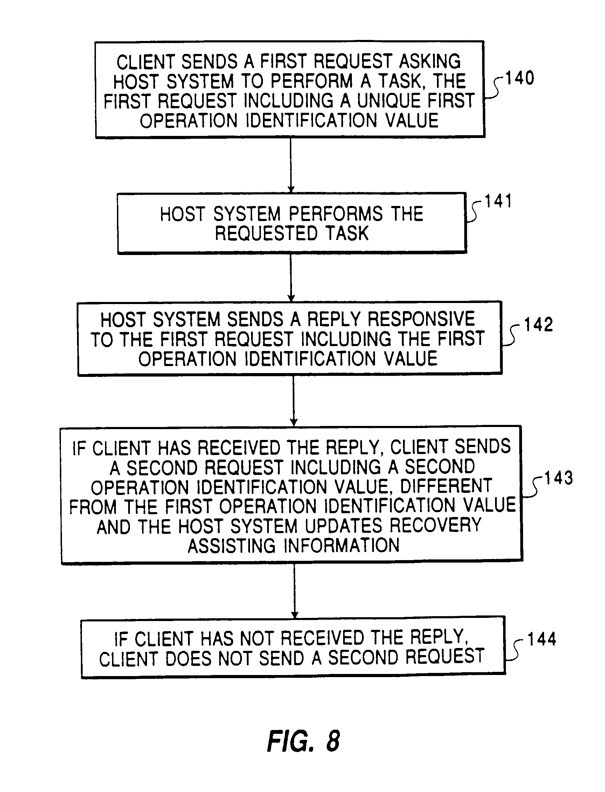

Fig. 8 shows a communication technique for use when client 15 may not send a second request until receiving a reply from the host system 20 for the first request of a single thread of control scenario. In this scenario, client 15 sends a first request asking the host system 20 to perform a task, such as updating a database (not shown) by the server 70 (step 140). The request should contain a unique operation identification value 73 to aid in the error recovery previously described.

The host system 20 then performs the task in accordance with the first request (step 141) and sends a responsive reply (step 142). The reply contains the first operation identification value to allow the client 15 to match the reply to the corresponding first request. The receipt of a reply by the client 15 acknowledges that the request has been processed by the host system 20. Once a reply has been received by the client 15, the client may then send a second request including a second unique operation identification value. Upon receipt of the second unique operation identification value, the host system then updates the recovery assisting information (step 143). Absent a reply, the client 15 assumes that the request has not been processed (step 144).

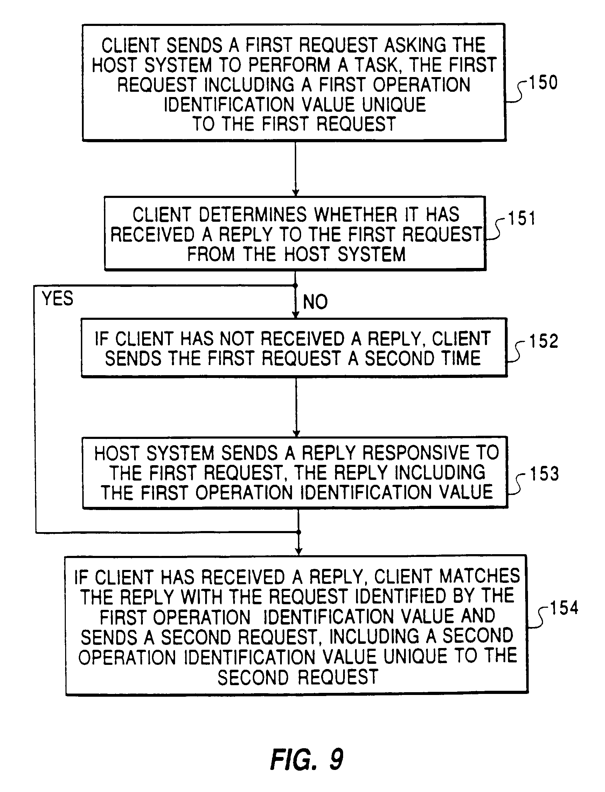

When the client 15 fails to receive a reply to a previously sent request in the single thread of control scenario, the request is preferably retransmitted. Fig. 9 shows a communication technique which may be used in such a scenario. The client begins by sending a first request asking the host system 20 to perform a task, the request including an operation identification value 73(step 150). The client 15 then determines whether a reply has been received which corresponds to the first request (step 151). For example, the client 15 may determine that it has not received a reply by simply waiting a predetermined amount of time for a request, and after such time has expired, may assume that a failure has prevented the receipt of a reply.

If the client 15 has not received a reply to the first request, the client 15 retransmits the first request (step 152). The preferred embodiment shown in Fig. 1 ensures that the receipt of the first request a second time by the host system 20 will not affect the storage of recovery assisting information, because the recovery assisting information is not updated in a duplicate reply.

If the client fails to receive a reply for the first request sent a second time, the client may continue to send the request until a reply is received.

Assuming that the error which caused the failed request is corrected or does not occur again, the client 15 receives a reply responsive to the first request including the first operation identification value 73 (step 153). Finally, the client 15 matches the reply with the first request and may send a second request including a unique second operation identification value 73 (step 154). The retransmission of a reply by the queue manager 17 is identical to the transmission of the reply the first time. From the queue managers 17 perspective, it is irrelevant whether the client 15 failed to receive the reply the first time because of a communication failure or because of a client 15 failure and subsequent reregistration.

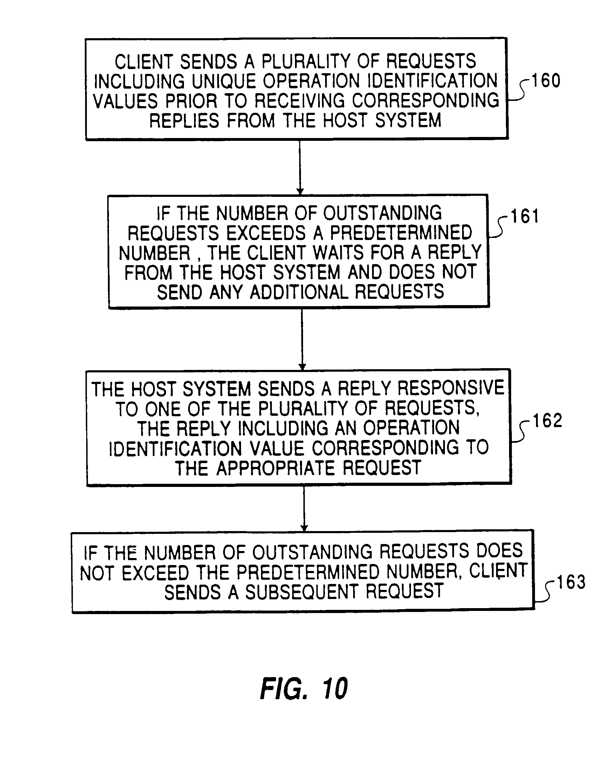

Multiple threads of control allow the client 15 to send several requests prior to receiving corresponding replies. This is especially useful to prevent unnecessary waiting by the client if the time between request sent and reply received is long. Fig. 10 shows a communication technique wherein an acknowledgment is implied in the receipt of a reply in a multiple thread scenario.

In a multiple thread scenario, when registering with the queue manager 17, the client 15 must designate a maximum number of threads which may be used. The client 15 then sends a plurality of requests, each including a unique operation identification value 73, prior to receiving any replies corresponding to the plurality of requests (step 160). Each request has a different thread identification value, and the number of threads cannot exceed the registered maximum. Each thread may only have one outstanding request. Thus, a particular thread may not send a second request until it has received a reply to its outstanding request. When the number of outstanding requests for a client 15 equals the predetermined number of threads, the client 15 may not send any more requests until it receives a reply from the host system 20 (step 161).

After host system 20 processes one of the outstanding requests, the host system 20 sends a reply to the client 15 (step 162). After receipt of this reply, the number of outstanding requests is reduced and the client may send the next request (step 163). In the preferred embodiment, after receipt of the reply by a particular thread, only that particular thread may send the next request because the remaining threads all have outstanding requests.

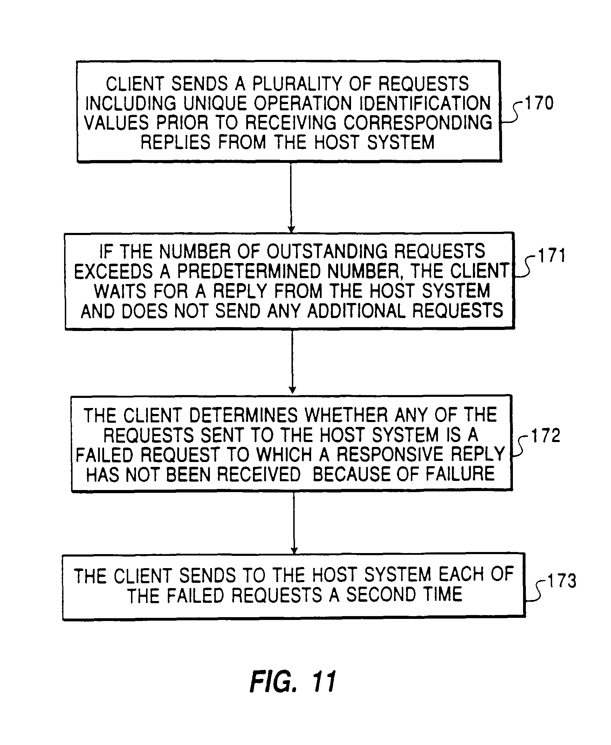

A client 15 which supports multiple threads of control may also retransmit a request if the client 15 determines that the request has failed. A preferred implementation for such retransmission is shown in Fig. 11.

The client 15 sends a plurality of requests, each including a unique operation identification value, prior to receiving any replies corresponding to the plurality of requests (step 170). If the number of outstanding requests for a client 15 exceeds the predetermined number of threads, the client 15 may not send any more requests and must wait for a reply from the host system 20 (step 171).

Next, the client determines whether any of the outstanding requests has not received a reply because of a failure (step 172). The failure could be, for example, in the host system 20 or in the communication path 50. The client 15 may also determine that it has not received a reply by simply waiting a predetermined amount of time for a request, and after such time has expired, may assume that a failure has prevented the receipt of a reply.

If the client 15 determines that any failed requests exist, the client 15 sends each failed request to the host system 20 a second time (step 173). The preferred embodiment of system 10 (Fig. 1) ensures that the receipt of the failed request a second time by the host system 20 will not affect the storage of recovery assisting information, because the recovery assisting information is not updated in a duplicate reply.

If the client 15 fails to receive a reply for the failed request sent a second time, the client may continue to send the failed request until a reply is received.

### F. Subqueues

If the data queue 21 is divided into subqueues, as identified by the field 47 in the queue attribute list 40, the operations performed by the host system 20 will be modified to identify a subqueue into which a stimulus will be enqueued. Such identification could occur either in response to the receipt of an enqueue request from the stimulus clerk 13, or a dequeue request from the response clerk 14. For example, if subqueues are organized ac-cording to priority level, the request in the enqueue request from the stimulus clerk 13 will identify a priority level, and the host system 20 will store the request in the tail of the subqueue associated with that priority level. In response to dequeue requests from the response clerk 14, the host system 20 may retrieve the request from the various subqueues at rates reflecting the respective priority levels.

Similarly, if the subqueues are based on varying types of stimuli, the queue manager 17, upon receipt of an enqueue request, determines the type of stimulus contained in the enqueue request and stores the stimulus in the associated subqueue. In response to a dequeue request from the response process 12, the queue manager 17 determines, either from the dequeue request or from other stored information in the queue database 60, the types of stimuli that the response process 12 can process. Queue manager 17 then retrieves a stimulus from that subqueue for transmission to the response clerk 14.

### G. Conclusion

The present invention provides a number of advantages. First, it enables a plurality of stimulus processes 11 to request services from a plurality of response processes 12, while facilitating balancing of the loads on the response processes 12. Since all of the response processes 12 retrieve stimuli from the single data queue 21 when they are ready to perform a new processing task, they are always kept busy while the data queue 21 contains unretrieved stimuli to transfer to the response processes 12. In addition, since the response processes 12 retrieve requests when they are ready to perform a new processing task, the requests do not queue up at any individual response process 12 while others may be idle.

Furthermore, the present invention ensures that a stimulus is delivered and processed in the event of a malfunction in either a client 15, a server 70, the queue manager 17, or various communications links. Since the present invention maintains the last request from a client 15, the last request received from the stimulus process 11 is transmitted to the client 15 if the client 15 attempts to register with the present invention without having deregistered. As a result, the client 15 can take corrective action.

The present invention provides similar benefits in connection with the response processes 12. Further, since the present invention maintains the last request dequeued for a response processes 12. Thus, if the response process 12 attempts to register without having deregistered, the present invention transmits to the response client 12 the last request it had dequeued to permit it to take corrective action.

The present invention provides the additional benefit of durability of requests and responses through various failures.

Particularly, since the preferred embodiment of the present invention maintains the recovery assisting information, the requests, and the responses in durable storage, recovery from a failure of the queue manager 17 can be accomplished without loss of data or loss of state.

The foregoing description has been limited to specific embodiments of this invention. It will be apparent, however, that variations and modifications may be made to the invention, with the attainment of some or all of the advantages of the claimed invention.

## Claims

1. A method of communication between clients and a host system in an information transmission system in which the clients (15) send requests to the host system (20), and the host system maintains a list (18) of clients which have registered prior to sending requests and which have not subsequently deregistered,
the method comprising the steps of:
sending (101) a registration signal to said host system from a client;
determining (102), by said host system, whether said client is in said list; and
storing (103) in said list, by said host system, a client identification value (61) associated with said client if said client is not in said list, thereby indicating that said host system is prepared to receive one or more of said requests from said client;
characterized in that said requests include recovery assisting information (74, 61-65, 73), and said method further includes the step of:
sending (104) to said client, if said client is in said list, the recovery assisting information from the request most recently sent from said client to said host system thereby assisting said client in failure recovery.

2. A method of communication between clients and a host system in an information transmission system containing clients (15) which send requests to the host system (20), and in which the host system sends replies to said clients responsive to said requests,
the method comprising the steps of:
(a) sending (150) a first request, by a client, asking said host system to perform a task, said first request including a first operation identification value (73) unique to said first request; and characterized by the steps of:
(b) determining (151), by said client (15), whether said client has received a reply to said first request from said host system (20);
(c) sending (152) said first request a second time by said client if said client has not received a reply to said first request from said host system;
(d) sending (153) a reply by said host system, responsive to said first request, said reply including said first operation identification value (73), thereby acknowledging that said task has been completed in accordance with said first request;
(e) sending (154) a second request by said client, including a second operation identification value (73) unique to said second request, only if said client has received said reply, thereby acknowledging said first request has been processed.

3. A method according to claim 2 wherein step (a) includes the step of sending (170) a plurality of said first requests prior to receiving corresponding replies from said host system, each of said first requests being further identified by a unique value (71); and wherein subsequent steps (b) to (e) are carried out independently for each of said plurality of first requests respectively.

4. A method as in claim 1 wherein said recovery assisting information includes a tag (74) containing information determined by said client.

5. A method as in claim 1 or claim 4 wherein a said host system stores said recovery assisting information on a durable memory which retains integrity through failure.

6. A method as in claim 3 wherein said step of sending a plurality of first requests includes the sub-step of sending a thread identification value (71) associated with each of said plurality of requests.

7. The method as in claim 1 wherein said recovery assisting information includes information identifying the last request sent by a said client.

8. The method as in claim 1 wherein said recovery assisting information includes information identifying the last reply sent by said host system.

9. The method of claim 3 wherein said second operation identification value is incrementally related to said first operation identification value (73).

10. The method of claim 1 said step of sending a request includes:
enqueuing said request in a host system by said client;
dequeuing said request from said host system by a server.

11. The method of claim 10 wherein said host system stores said requests on a durable memory which retains integrity through failure.

12. The method of claim 1 said step of sending a response includes:
enqueuing said response in a host system by a server;
dequeuing said response from said host system by said client.

13. The method of claim 12 wherein said host system stores said responses on a durable memory which retains integrity through failure.

14. The method of claim 1 wherein said host system comprises a plurality of host systems and a plurality of server systems connected in a serial fashion.

15. The method of claim 1 wherein said list of clients is stored in a durable memory which retains integrity through failure.

16. The method of claim 2 wherein said step of sending a reply includes the sub step of storing said request on durable memory prior to sending said reply.

## Patentansprüche

1. Verfahren zur Kommunikation zwischen Clients und einem Hostsystem in einem Informationsübertragungssystem, bei welchem die Clients (15) Anfragen an das Hostsystem (20) senden und das Hostsystem eine Liste (18) von Clients führt, die vor dem Absenden der Anfragen registriert und nachfolgend nicht entregistriert worden sind,
wobei das Verfahren die Schritte aufweist:
Senden (101) eines Registriersignals von einem Client zum Hostsystem;
Bestimmen (102) durch das Hostsystem, ob der Client in der Liste steht; und
Speichern (103) eines Clientidentifikationswertes (61) in der Liate durch das Hostsystem, der dem Client zugeordnet ist, wenn der Client nicht in der Liste steht, wodurch angegeben wird, dass das Hostsystem bereit ist, eine oder mehrere Anfragen vom Client zu empfangen;
dadurch gekennzeichnet, dass die Anfragen eine Wiedergewinnungsunterstützungsinformation (74, 61-65, 73) enthalten und das Verfahren ferner den Schritt aufweist,
Senden (104) der Wiedergewinnungsunterstützungsinformation aus der Anfrage, die am jüngsten vom Client zum Rostsystem gesandt worden ist, zum Client, wenn der Client in der Liste steht, wodurch der Client bei der Fehlerentdekkung unterstützt wird,

2. Verfahren zur Kommunikation zwischen Clients und einem Hostsystem in einem Informationsübertragungssystem welches Clients (15) enthält, welche Anfragen zum Hostsystem (20) senden und bei dem das Hostsystem Antworten zu den Clients in Reaktion auf die Anfragen sendet,
wobei das Verfahren die Schritte aufweist:
(a) Senden (150) einer ersten Anfrage durch einen Client, wobei das Hostsystem gebeten wird, eine Aufgabe durchzuführen, wobei die erste Anfrage einen ersten Operationsidentifikationswert (73) enthält, der für die erste Anfrage eindeutig ist; und gekennzeichnet durch die Schritte;
(b) Bestimmen (151) durch den dient (15), ob der Client vom Hostsystem (20) eine Antwort auf die erste Anfrage erhalten hat;
(c) Senden (152) der ersten Anfrage ein zweites Mal durch den dient, wenn der Client vom Hostsystem keine Antwort auf die ersts Anfrage erhalten hat;
(d) Senden (153) einer Antwort durch das Hostsystem in Reaktion auf die erste Anfrage, wobei die Antwort den ersten Operationsidentifikationswert (73) enthält, wodurch bestätigt wird, dass die Aufgabe gemäß der ersten Anfrage erledigt worden ist;
(e) Senden (154) einer zweiten Anfrage durch den Client, welche einen zweiten Operationsidentifikationswert (73) enthält, der zur zweiten Anfrage eindeutig ist, nur dann, wenn der Client die Antwort erhalten hat, wodurch bestätigt wird, dass die erste Anfrage bearbeitet worden ist.

3. Verfahren nach Anspruch 2, wobei Schritt (a) den Schritt enthält: Senden (170) einer Mehrzahl der ersten Anfragen, bevor entsprechende Antworten vom Hostsystem erhalten werden, wobei jede der ersten Anfragen weiterhin durch einen eindeutigen Wert (71) identifiziert wird, und wobei die nachfolgenden Schritte (b) bis (e) in entsprechender Weise unabhängig für jede der Mehrzahl von ersten Anfragen ausgeführt werden.

4. Verfahren nach Anspruch 1, wobei die Wiedergewinnungsunterstützungsinformation eine Kennzeichnung (74) enthält, welche eine vom Client bestimnte Information enthält.

5. Verfahren nach Anspruch 1 oder 4, wobei das Hostsystem die Wiedergewinnungsunterstützungsinformation in einem dauerhaften Speicher speichert, der bei einer Störung unversehrt bleibt.

6. Verfahren nach Anspruch 3, wobei der Schritt des Sendens einer Mehrzahl von ersten Anfragen den Unterschritt des Sendens eines Kettenidentifikationswertes (71) enthält, der jeder der Mehrzahl von Anfragen zugeordnet ist.

7. Verfahren nach Anspruch 1, wobei die Wiedergewinnungsunterstützungsinformation eine Information enthält, welche die letzte von einem Client gesendete Anfrage identifiziert.

8. Verfahren nach Anspruch 1, wobei die Wiedergewinnungsunteratützungsinformation eine Information enthält, welche die letzte vom Hostsystem gesendete Antwort identifiziert.

9. Verfahren nach Anspruch 3, wobei der Operationsidentifikationswert inkremental auf den ersten Operationsidentifikationswert (73) bezogen ist.

10. Verfahren nach Anspruch 1, wobei der Schritt des Sendens einer Anfrage enthält:
Einreihen der Anfrage in eine Warteschlange in einem Hostsystem durch den Client;
Entfernen der Anfrage vom Hostsystem aus der Warteschlange durch einen Server.

11. Verfahren nach Anspruch 10, wobei das Hostsystem die Anfragen in einem dauerhaften Speicher speichert, der bei einer Störung unversehrt bleibt.

12. Verfahren nach Anspruch 1, wobei der Schritt der Sendens einer Antwort umfaßt:
Einreihen der Antwort in eine Warteschlange in einem Rostsystem durch einen Server;
Entfernen der Antwort vom Hostsystem aus der Warteschlange durch den Client.

13. Verfahren nach Anspruch 12, wobei das Hostsystem die Antworten in einem dauerhaften Speicher speichert, welcher bei einer Störung unversehrt bleibt.

14. Verfahren nach Anspruch 1, wobei das Hostsystem eine Mehrzahl von Hostsystemen und eine Mehrzahl von Serversystemen umfaßt, die in Reihe verbunden sind.

15. Verfahren nach Anspruch 1, wobei die Liste der Clients in einem dauerhaften Speicher gespeichert ist, welcher bei einer Störung unversehrt bleibt.

16. Verfahren nach Anspruch 2, wobei der Schritt des sendens einer Antwort den Unterschritt des Speicherns der Anfrage in einem dauerhaften Speicher vor dem Senden der Antwort enthält.

## Revendications

1. Procédé de communication entre des clients et un système central dans un système de transmission d'informations dans lequel les clients (15) envoient des demandes au système central (20), et le système central maintient une liste (18) de clients qui se sont enregistrés avant d'envoyer des demandes et qui n'ont pas été ensuite supprimés de la liste,
le procédé comprenant les étapes suivantes :
envoi (101) d'un signal d'enregistrement audit système central en provenance d'un client ;
détermination (102), par ledit système central, si ledit client est ou non dans ladite liste ; et
stockage (103) dans ladite liste, par ledit système central, d'une valeur d'identification de client (61) associée audit client si ledit client n'est pas dans ladite liste, indiquant, de ce fait, que ledit système central est préparé à recevoir une ou plusieurs desdites demandes en provenance dudit client ;
caractérisé en ce que lesdites demandes comprennent des informations d'aide à la récupération (74, 61 à 65, 73), et ledit procédé comprend, de plus l'étape suivante :
envoi (104) audit client, si ledit client est dans ladite liste, des informations d'aide à la récupération en provenance de la demande la plus récemment envoyée par ledit client audit système central, aidant, de ce fait, ledit client lors d'une récupération de défaillance.

2. Procédé de communication entre des clients et un système central dans un système de transmission d'informations comportant des clients (15) qui envoient des demandes au système central (20), et dans lequel le système central envoie des réponses auxdits clients en réponse auxdites demandes,
le procédé comprenant les étapes suivantes :
(a) envoi (150) d'une première demande, par un client, demandant audit système central d'effectuer une tâche, ladite première demande comprenant une première valeur d'identification d'opération (73) unique à ladite première demande ; et caractérisé par les étapes suivantes :
(b) détermination (151), par ledit client (15), si ledit client a ou non reçu une réponse à ladite première demande en provenance dudit système central (20) ;
(c) envoi (152) de ladite première demande une seconde fois par ledit client si ledit client n'a pas reçu une réponse à ladite première demande en provenance dudit système central ;
(d) envoi (153) d'une réponse par ledit système central, en réponse à ladite première demande, ladite réponse comprenant ladite première valeur d'identification d'opération (73), accusant réception du fait que ladite tâche a été achevée selon ladite première demande ;
(e) envoi (154) d'une seconde demande par ledit client, comprenant une seconde valeur d'identification d'opération (73) unique à ladite seconde demande, seulement si ledit client a reçu ladite réponse, accusant réception du fait que ladite première demande a été traitée.

3. Procédé selon la revendication 2, dans lequel l'étape (a) comprend l'étape d'envoi (170) d'une pluralité desdites premières demandes avant de recevoir des réponses correspondantes en provenance dudit système central, chacune desdites premières demandes étant identifiée de plus par une valeur unique (71) ; et dans lequel les étapes suivantes (b) à (e) sont respectivement exécutées indépendamment pour chaque demande de ladite pluralité de premières demandes.

4. Procédé selon la revendication 1, dans lequel lesdites informations d'aide à la récupération comprennent un préfixe (74) contenant des informations déterminées par ledit client.

5. Procédé selon la revendication 1 ou la revendication 4, dans lequel un dit système central stocke lesdites informations d'aide à la récupération sur une mémoire durable qui conserve son intégrité pendant une défaillance.

6. Procédé selon la revendication 3, dans lequel ladite étape d'envoi d'une pluralité de premières demandes comprend l'étape secondaire d'envoi d'une valeur d'identification de chemin (71) associée à chaque demande de ladite pluralité de demandes.

7. Procédé selon la revendication 1, dans lequel lesdites informations d'aide à la récupération comprennent des informations identifiant la dernière demande envoyée par un dit client.

8. Procédé selon la revendication 1, dans lequel lesdites informations d'aide à la récupération comprennent des informations identifiant la dernière réponse envoyée par ledit système central.

9. Procédé selon la revendication 3, dans lequel ladite seconde valeur d'identification d'opération se rapporte, par incrément, à ladite première valeur d'identification d'opération (73).

10. Procédé selon la revendication 1, dans lequel ladite étape d'envoi d'une demande comprend :
la mise en file d'attente de ladite demande dans un système central par ledit client ;
la sortie de file d'attente de ladite demande à partir dudit système central par un serveur.

11. Procédé selon la revendication 10, dans lequel ledit système central stocke lesdites demandes sur une mémoire durable qui conserve son intégrité pendant une défaillance.

12. Procédé selon la revendication 1, dans lequel ladite étape d'envoi d'une réponse comprend :
la mise en file d'attente de ladite demande dans un système central par un serveur ;
la sortie de file d'attente de ladite demande à partir dudit système central par ledit client.

13. Procédé selon la revendication 12, dans lequel ledit système central stocke lesdites réponses sur une mémoire durable qui conserve son intégrité pendant une défaillance.

14. Procédé selon la revendication 1, dans lequel ledit système central comprend une pluralité de systèmes centraux et une pluralité de systèmes serveurs reliés en série.

15. Procédé selon la revendication 1, dans lequel ladite liste de clients est stockée dans une mémoire durable qui conserve son intégrité pendant une défaillance.

16. Procédé selon la revendication 2, dans lequel ladite étape d'envoi d'une réponse comprend l'étape secondaire de stockage de ladite demande sur une mémoire durable avant d'envoyer ladite réponse.
